# EUROPEAN PATENT APPLICATION

(11) **EP 1 202 104 A1**
(43) Date of publication of application: **02.05.2002**
(21) Application number: 00949950.0
(22) Date of filing: 02.08.2000
(51) Int. Cl.: G02B 27/02, H04N 5/64, G09F 9/00

(54) **HEAD MOUNTABLE DISPLAY DEVICE**

(30) Priority: 06.08.1999 JP 22455999; 02.11.1999 JP 31217099
(71) Applicant: Olympus Optical Co., Ltd., Tokyo 151-0072 (JP)
(72) Inventor: HANAYAMA, Ryotaro, Sagamihara-shi, Kanagawa 229-1133 (JP); ICHIKAWA, Hirotoshi, Hachioji-shi, Tokyo 192-0032 (JP); SUZUKI, Koji, Shiki-shi, Saitama 353-0004 (JP)
(74) Representative: von Hellfeld, Axel, Dr. Dipl.-Phys.
(86) International application number: JP0005165
(87) International publication number: WO0111413

(57) **Abstract**

A monocular HMD that is a head-mounted image display device consists mainly of a viewer (1), an arm (2), and a headband (3). An image display LCD (67), an image prism (14), and a see-through prism (15) are incorporated in the viewer. The arm bears the viewer so that the viewer can pivot, and has a compound circuit board (51) for extending control incorporated therein. The headband bears the arm so that the arm can rotate on a ball (34), and can be worn on the head. The compound circuit board includes a plurality of rigid substrates and a plurality of FPCs. The compound circuit board is placed obliquely in conformity with the outline of the arm and will not restrict the shape of the arm.

## Description

### Technical Field

The present invention relates to a head-mounted display device having an optical system that projects an image, which is produced by an image display means, on at least one of the observer's retinas.

### Background Art

Various types of binocular head-mounted image display devices including a so-called head-mounted display (hereinafter HMD) have been put to practical use as compact display devices for displaying an image. In recent years, various types of monocular head-mounted display devices have been proposed in order to view an output image including an image represented by data sent from a personal computer with one eye. This type of display device is used to manage articles or maintain and inspect machines by a user who can view a screen image, which is produced by a personal computer and transmitted by a display device, with one eye, and observe an ambient environmental condition with the other eye at the same time.

For example, Japanese Unexamined Patent Application Publication No. 10(1998)-74051 has disclosed a head-mounted display device that is a monocular display device shared by the left eye and the right eye. Moreover, Japanese Unexamined Patent Application Publication No. 10(1998)-123455 has disclosed a head-mounted display device that has an optical element fixed to the front end of an arm that extends forwards from one lateral side of an observer. Even if the optical element or arm collides with an obstacle, the display device is prevented from being broken. Moreover, a head-mounted display device disclosed in Japanese Unexamined Patent Application Publication No. 10(1998)-75408 that holds a monocular viewing arm and an optical element and can be worn on the head readily and quickly owing to the elasticity of a supporting block. Moreover, Japanese Unexamined Patent Application Publication No. 10(1998)-39784 has disclosed a head-mounted image display device that is of a monocular type and enables an observer to freely change the direction of a virtual image relative to the observer.

However, as far as those disclosed in the Japanese Unexamined Patent Publication Nos. 10-74051, 10-123455, 10-75408, and 10-39874 are concerned, the structure with which the display device is worn on the head is complex. Two band-like linkage members are placed over the head and four head pad members are arranged on the head. It is time-consuming to handle this structure. Moreover, it is rather unfeasible to wear a helmet together with the display device.

On the other hand, Japanese Unexamined Patent Application Publication No. 8(1996)-305298 has disclosed a head-mounted display device that will not block an observer's front visual field. Moreover, a display device disclosed in Japanese Unexamined Patent Publication No. 8(1996)-320453 is a monocular head-mounted display device whose display unit can be attached to or detached from a position at which an image is projected exclusively to one of the right and left eyes or a position at which an image is projected exclusively to the other eye.

However, in the head-mounted display devices disclosed in the Japanese Unexamined Patent Publication Nos. 8-305298 and 8-320453, the position of the display unit is limited to an upward position. This is inconvenient for a user to view an image. Moreover, the user has little freedom in selecting a direction of viewing. Thus, the display devices are not user-friendly.

The foregoing drawbacks of the existing head-mounted display devices and the other drawbacks thereof will be listed below.
(1) It is hard to change a position at which an image is displayed.
(2) An object located in a visual field that extends in a direction other than the direction of a display unit is hard to view.
(3) The display device is sufficiently kept neither waterproof nor dustproof.
(4) The display device is not compact because components including circuit boards are not neatly arranged.
(5) Screen image-display states cannot be changed at all or cannot be changed readily.
(6) Sounds generated in an external environment cannot be distinguished from sounds relevant to a displayed image.
(7) Earphones used to hear sounds relevant to a displayed image are hard to handle.
(8) A main cable over which a driving signal is transmitted to an image display unit is annoying.
(9) A headband used to wear an image display device on the head is hard to handle.
(10) The eyes cannot be readily changed in order to view an image.

Accordingly, the present invention attempts to overcome the above drawbacks underlying the existing head-mounted display devices. An object of the present invention is to provide a head-mounted display device that is compact, can be worn on the head readily, and enables a user to view a display screen image and observe an ambient environmental condition at the same time. Moreover, an earphone can be handled readily. The head-mounted display device is thus user-friendly.

### Disclosure of Invention

The present invention provides a head-mounted image display device consisting mainly of an image display means, an optical system, a casing block, and a supporting block. The optical system projects an image, which is produced by the image display means, and/or an image of an ambient outside world on at least one of the observer's eyes. The casing block accommodates the image display means and optical system, and holds the image display means and optical system at a position near the observer's head at which an image is viewed. The supporting block supports the casing block on the head. Herein, the casing block includes an arm member and a viewer member. The arm is borne by the supporting block. The viewer is borne by the arm and has the image display means and optical system incorporated therein. The portion of the arm adjoining the viewer is narrowed.

In the head-mounted image display device, the supporting block is mounted on the head in order to wear the casing block on the head. An observer views an image and/or an ambient outside world with at least one of his/her eyes through the optical system incorporated in the viewer of the casing block.

### Brief Description of the Drawings

Fig. 1 is a perspective view showing a monocular HMD that is a head-mounted-image display device in accordance with an embodiment of the present invention;
Fig. 2 is a cross sectional view of the monocular HMD in accordance with the embodiment;
Fig. 3 is a plan view showing the monocular HMD in accordance with the embodiment that is worn on the head, wherein a viewer is turned in a horizontal direction and an arm is rotated therein;
Fig. 4 is a side view showing the monocular HMD in accordance with the embodiment whose arm is rotated in a vertical direction; and
Fig. 5 is a development of a compound circuit board unit incorporated in the monocular HMD in accordance with the embodiment.

### Best Mode for Carrying Out the Invention

An embodiment of the present invention will be described in conjunction with the drawings below.

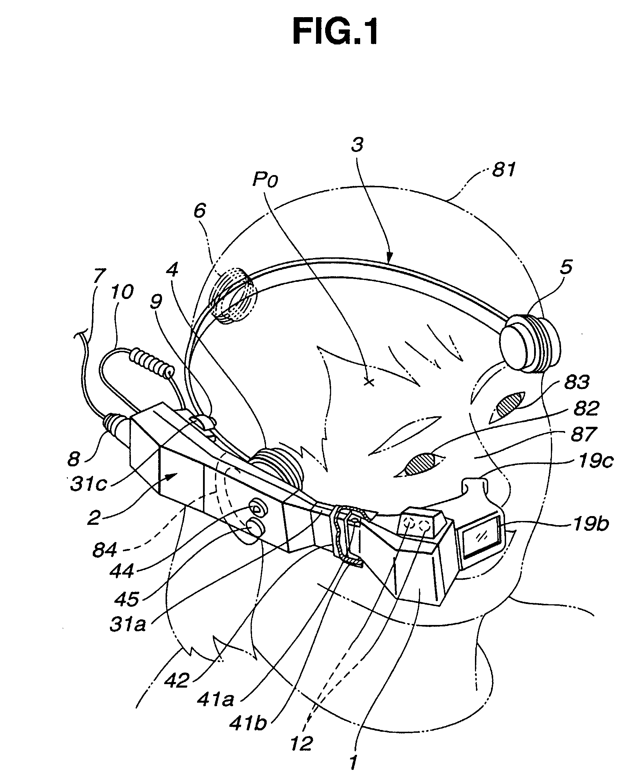

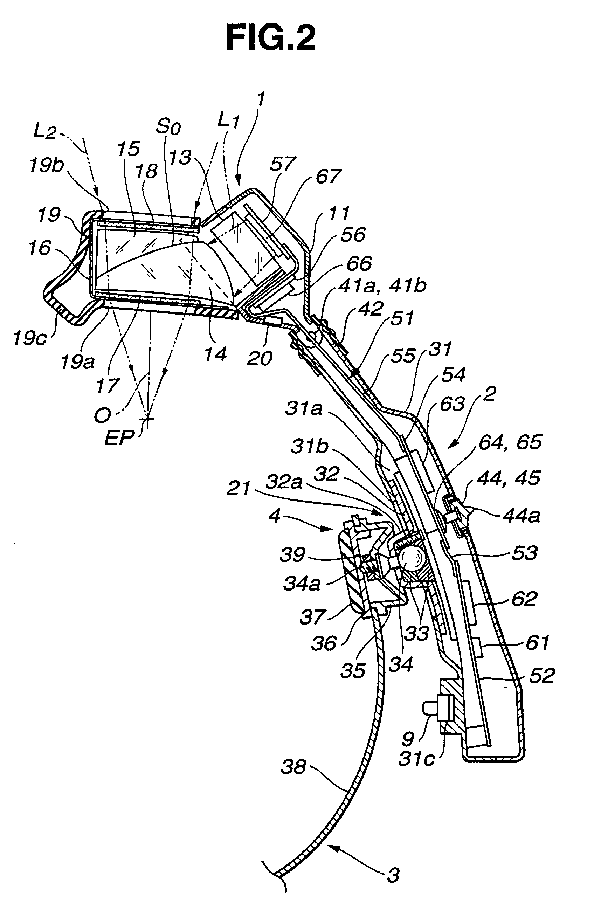

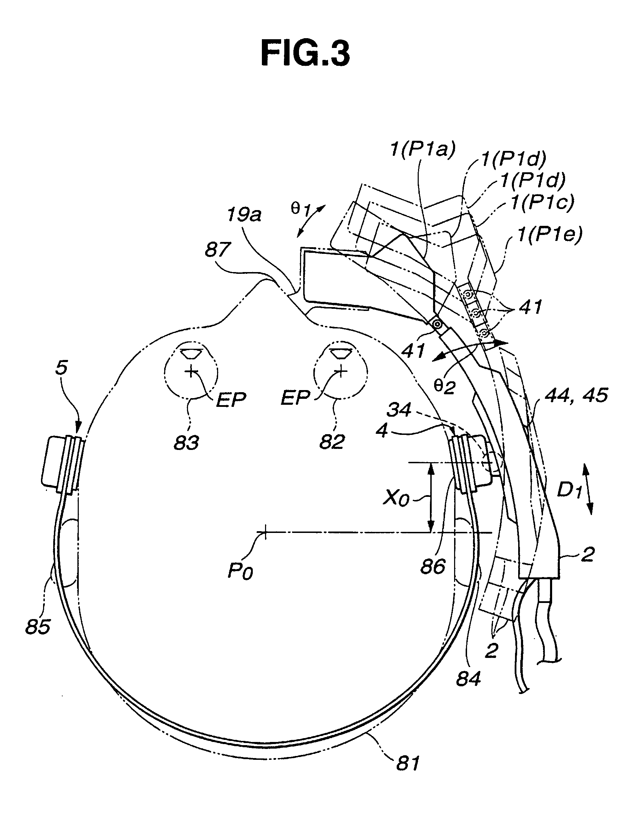

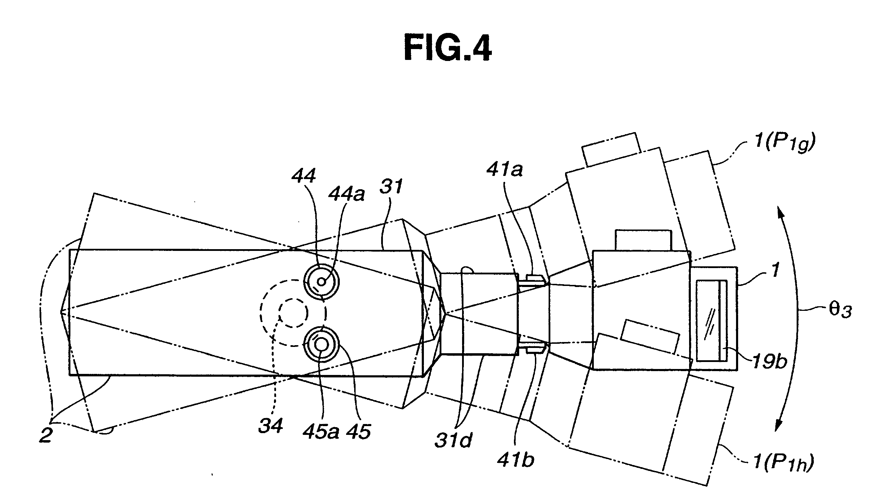

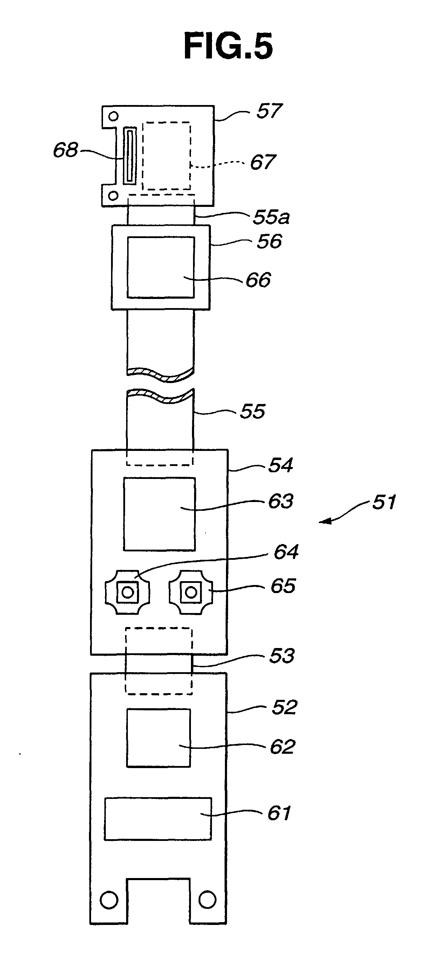

Fig. 1 is a perspective view showing a monocular HMD that is a head-mounted image display device in accordance with the embodiment of the present invention, wherein the monocular HMD is worn on the head. Fig. 2 is a cross sectional view of the monocular HMD. Fig. 3 is a plan view of the monocular HMD which is worn on the head and whose viewer is turned in a horizontal direction and whose arm is rotated therein. Fig. 4 is a side view showing the monocular HMD whose arm is rotated in a vertical direction. Fig. 5 is a development showing a compound circuit board unit that is incorporated in the viewer and the arm alike.

The monocular HMD in accordance with the present embodiment is a display device used to manage articles or maintain and inspect machines. The display device is worn on the observer's head, whereby the observer views with his/her right or left eye a screen image, which is produced by a personal computer and transmitted by a viewer that is a display unit, together with a see-through screen image that is an image of an ambient outside world.

The monocular HMD consists mainly of, as shown in Fig. 1, a viewer 1, an arm 2, and a headband 3. The viewer 1 is one member of a casing block in which a single image display means and an optical system are incorporated. The arm 2 is the other member of the casing block in which an input circuit, a main control circuit, and selection switches are incorporated and an earphone is stowed. The headband 3 is a supporting block that supports the arm 2 and is worn on the observer's head. An image signal and an audio signal sent from a personal computer (not shown) are received by the input circuit incorporated in the HMD via a HMD controller (not shown). Consequently, an image or sounds are reproduced.

A compound circuit board unit 51 including circuits that process an image signal and an audio signal received by the monocular HMD is incorporated in the viewer 1 and arm 2 alike. The compound circuit board unit 51 consists of, as shown in Fig. 5, an input circuit board 52 that is a rigid substrate, a main control circuit board 54 that is a rigid substrate, a drive circuit board 56 that is a rigid substrate, an LCD substrate 57 that is a rigid substrate, a flexible printed-circuit board (hereinafter FPC) 53, and an FPC 55. The FPC 53 links the input circuit board 52 and main control circuit board 54. The FPC 55 links the main control circuit board 54, LCD drive circuit board 56, and LCD substrate 57.

Note that a CPU 63 responsible for control of the whole HMD, and selection switches 64 and 65 to be used to change screen image displayed states are mounted on the main control circuit board 54. A serial signal cable, a connector 61 to which an earphone connection cord is coupled, and an input circuit IC 62 are mounted on the input circuit board 52.

An LCD drive circuit IC 66 is mounted on the drive circuit board 56. An LCD 67 that is a reflective display element serving as an image display means, an illumination LED 12, and a connector 68 through which a microphone 20 is connected are mounted on the LCD substrate 57.

The viewer 1 consists mainly of a main viewer unit and a prism unit. The main viewer unit includes, as shown in Fig. 2 and Fig. 3, a viewer body 11, the drive circuit board (rigid substrate) 56, the LCD substrate (rigid substrate) 57, an illumination prism 13, two light source LEDs 12, and the microphone 20. The viewer body 11 is borne by the arm 2 using hinge pins 41a and 41b so that the viewer body 11 can pivot in horizontal directions θ1. The drive circuit board 56 and LCD substrate 57 are members incorporated in the viewer body 11 and included in the compound circuit board unit 51. The LCD drive circuit IC 66 is mounted on the drive circuit board 56, and the LCD 67 serving as a reflective display element (display means) is mounted on the LCD substrate 57. The illumination prism 13 is opposed to the face of the LCD 67. The two light source LEDs 12 are LEDs mounted on an LED substrate that is not shown, and placed above the illumination prism 13.

The viewer body 11 is made of a metal that little undergoes a time-passing change or deforms due to temperature and that is useful in preventing leakage light. A material that hardly distorts due to a humid or temperature change is adopted for the illumination prism 13 in order to prevent a resistive distortion. Moreover, the LCD drive circuit IC 66 is located near the LCD 67 in the viewer body 11, thus suppressing generation of radiation noise to the greatest possible extent.

The prism unit consists mainly of a prism holding metal 16, a free-shape prism (free-form surface prism) 14, a see-through prism 15, an eyepiece-side acrylic panel 17, an objective-side acrylic panel 18, and a protective cover 19. The prism holding metal 16 is realized with a sheet metal and fixed to the viewer body 11. The free-shape prism 14 is included in an optical system and fixed to or borne by the holding metal 16. The see-through prism 15 is included in the optical system and has the see-through surface thereof bonded to the prism 14. The eyepiece-side and objective-side acrylic panels 17 and 18 are protective transparent panels finished to repel water and fixed to or borne by the holding metal 16 or viewer body 11. The protective cover 19 is attached to the periphery of the holding metal 16 or viewer body 11.

The protective cover 19 is made of a synthetic rubber (elastomer) that can deform elastically, and has an inner opening 19a, an outer opening 19b, and a nose pad portion 19c. The protective cover 19 is elastically deformed to be attached to the holding metal 16 or viewer body 11. The protective cover 19 thus intercepts extraneous light other than light coming through the see-through prism, and keeps the prism unit waterproof and dustproof.

Note that the protective cover 19 is freely attachable or detachable. Thus, another protective cover devoid of the outer opening 19b may be made available. When the protective cover 19 is replaced with the protective cover devoid of the outer opening 19b, the head-mounted image display device becomes usable in a mode in which a see-through screen image cannot be viewed. Moreover, if the protective cover 19 need not be replaced therewith, the protective cover 19 may be made stationary.

According to a variant, an extraneous light intercepting member may be freely detachably attached to the outer opening 19b of the protective cover 19 using a mechanical or manual means so that the same effect can be obtained.

The viewer 1 can be turned in directions θ1 (see Fig. 3) with the hinge pins 41a and 41b, which will be described later, as a fulcrum. When the viewer 1 is turned towards an observer, before the prism unit comes into contact with the observer's right eye 82, the nose pad portion 19c of the protective cover 19 contacts the observer's nose 87. The prism unit will therefore not approach the nose too closely with a distance shorter than a predetermined distance between them.

The arm 2 consists mainly of the hinge pins 41a and 41b, an arm body 31, the main control circuit board 54, the input circuit board 52, control buttons 44 and 45, and a joint 21. The hinge pins 41a and 41b support the viewer 1 so that the viewer 1 can pivot in the directions θ1. The arm body 31 has such a curvature as to lie along the periphery of the head. The main control circuit board 54 and input circuit board 52 are members incorporated in the arm body 31. The CPU 63 responsible for control of the whole device and the selection switches 64 and 65 used to change screen image displayed states are mounted on the main control circuit board 54, and the connector 61 and input circuit IC 62 are mounted on the input circuit board 52. The control buttons 44 and 45 are operated in order to press the selection switches 64 and 65 respectively. The joint 21 links the arm 2 and the headband 3.

The arm 2 has a narrowed portion 31d, which is narrowed in the width direction (vertical direction) thereof as shown in Fig. 4, formed around the hinge pins 41a and 41b adjacently to the viewer 1. The narrowed portion 31d lessens limitation of the viewing eye's visual field, which extends in the outside world, by the arm 2.

Moreover, a dustproof cover 42 made of a rubber that can elastically deform and capable of freely bending is attached to the joint between the arm 2 which includes the hinge pins 41a and 41b and the viewer 1. The dustproof cover 42 also fills the role of keeping the joint waterproof.

Moreover, a main cable 7 protected with a bushing 8 and an earphone cord 10 are extended from the rear end of the arm body 31 (opposite to the distal end thereof adjoining the viewer). When the head-mounted image display device is worn on the head, the main cable 7 and earphone cord 10 extend backwards from above the ear 84.

The main cable 7 is a serial communication signal cable that extends from the HMD controller (not shown). The main cable 7 enables fast communication, and has the number of conductors contained therein decreased to exhibit excellent flexibility. So a user wearing the monocular HMD on the head will not be annoyed by the main cable 7. A communication signal sent from a personal computer to the HMD controller is a parallel signal. The communication signal is converted into a serial communication signal by the HMD controller, and transferred to the monocular HMD over the main cable 7.

As the earphone 9 mounted in the distal end of the earphone cord 10, a monophonic earphone of an ear-embedded type is adopted so that sounds generated in the outside world can be clearly distinguished from sounds generated by the personal computer. The earphone 9 can be mounted or stowed in an earphone mount 31c that is a concave part of the surface of the rear portion of the arm body 31 which faces inwards, that is, faces the head. With the earphone 9 stowed, the sounding opening of the earphone 9 faces the head. Even in this state, a user can hear sounds.

The joint 21 consists mainly of a joint body 32 and a ball support 33 that is divided into two portions. The joint body 32 includes a portion, which is engaged with a sliding groove 31a of the arm body 31 so that it can slide freely, and a holder 32a that holds the ball support 33. When the arm 2 slides in directions D1, the arm 2 slides along the sliding groove 31a while causing the holder 32a of the joint body to escape to an escape 31b.

Note that the arm 2 slides to trace a large arc that has the center P0 of the head 81 as a center. This sliding movement may be a straight sliding movement made back and force relative to the head.

The ball support 33 divided into two portions clamps a ball 34 fixed to a right face pad member 4 that will be described later. The ball support 33 holds the ball 34 so that the ball 34 can rotate with appropriate frictional holding force exerted. The ball support 33 is fixed to or borne by the joint body 32.

The control buttons 44 and 45 that are operated in order to press the selection switches 64 and 65 are lined vertically on the surface of the arm body 31 that faces outside. The position of the control buttons 44 and 45 is near the position of the ball support 33 and close to the viewer 1. Even when the arm 2 is slid to the rear end, the control buttons 44 and 45 will not move backwards farther than a line linking the center P0 of the head and the ball 34.

The control buttons 44 and 45 have different shapes. For example, the control button 44 has a projection 44a in the center thereof, while the control button 45 has a concave part 45a in the center thereof. Since the control buttons 44 and 45 have different shapes, when the control buttons 44 and 45 are operated in order to press the selection switches 64 and 65 to thus change screen image displayed states, whichever of the control buttons is pushed can be reliably recognized. Thus, an incorrect operation is prevented.

In order to change screen image displayed states, while the control button 44 is operated in order to press the selection switch 64, the control button 45 is operated in order to press the switch 65 repeatedly. Thus, screen image displayed states can be switched.

The screen image displayed states to be switched include a state in which a screen image is displayed on the LCD 67 while being reversed (180° rotated display), a state in which a screen image is displayed with the luminance of illumination light changed (with the brightness of a display screen image changed), a state in which a selected screen image displayed state is reset, and a state in which a screen image is displayed at an adjusted position on the screen (a finely adjusted position at which the screen image is easier to view with the eye). The image displayed states are sequentially changed stepwise by repeatedly pressing the selection switch 65.

The circuit board unit 51 is incorporated in the viewer 1 and arm 2 alike. Within the viewer 1, the circuit board 51 is placed in a proper posture while having the FPC 55a bent so that the rigid LCD substrate 57 will be orthogonal to the LCD drive circuit board 56. In particular, within the arm 22, the FPC 53 and FPC 55 are bent in order to place the input circuit board 52 and main control circuit board 54, which are rigid substrates, in a posture conformable to the curvature of the outline of the arm 2. According to a variant, the FPCs 55a, 55, and 53 are replaced with loose cables or flexible cables that have cuts made thereon so as to be able to bend freely.

The headband 3 consists mainly of, as shown in Fig. 1 and Fig. 3, a thin-sheet band 38 and right and left face pad members 4 and 5. The band 38 can elastically deform to trace an arc in conformity with the shape of the observer's head 81. The right and left face pad members 4 and 5 are located by a distance X0 ahead of a line linking the ear 84 and the center of the head P0.

The right face pad member 4 is fixed to both ends of the band 38. The right face pad member 4 consists mainly of a pad 37, a pad holding panel 36, a ball 34, and a ball holding panel 35. The pad 37 is made of a foam rubber (sponge) that can come into contact with the cheekbone 86 or superior ocular bone. The pad holding panel 36 holds the pad 37. The ball 34 has a spherical shape and includes a screw 34a. The ball 34 is fixed to the ball holding panel 35 with a nut 39 between them. Note that the band 38 is held clamped by the pad holding panel 36 and ball holding panel 35. The ball 34 is used to bear the joint 21 of the arm 2 so that the arm 2 can rotate with predetermined frictional holding force exerted. Moreover, the pad member 4 may be realized with a highly frictional member, or may have a sawtoothed surface as a surface that comes into contact with the head so that the pad member 4 will not shift on the head.

The left face pad member 5 has the same structure as the right face pad member 4 does but is devoid of the ball 34.

Now, a description will be made of the pivoting of the viewer 1 and the rotating and sliding of the arm 2. As already described, the arm 1 bears the viewer 1 so that the viewer 1 can pivot on the hinge pins 41a and 41b. The viewer 1 can therefore move in the lateral directions θ1 between a position P1a and a position P1b (see Fig. 3).

The arm 2 is borne by the ball 34 included in the right face pad member 4 via the joint 21 so that the arm 2 can rotate. Therefore, the arm 2 can rotate in lateral directions θ2 (see Fig. 3) and in vertical directions θ3 (see Fig. 4). This allows the viewer 1 to move from a position P1a to a position P1c and from a position P1g to a position P1h, simultaneously.

Furthermore, the arm 2 is borne by the right face pad member 4 via the joint body 32 so that the arm 2 can slide in the directions D1 (see Fig. 3). This allows the viewer 1 to move from a position P1d to a position P1e.

In order to view an image using the monocular HMD of the present embodiment having the aforesaid components, first, the headband 3 is worn on the head 81 as shown in Fig. 1. The earphone 9 is inserted into the ear 84. The controller is operated to transmit a video signal to the monocular HMD over the cable 7. An image is transmitted by the LCD 67 included in the viewer 1 according to the received video signal. Reflected light L1 of the displayed image passes through the illumination prism 13 and falls on the prism 14. The light is then converged at an eye point (EP) on the observer's right eye 82.

On the other hand, light L2 coming from the outside world that extends forwards is transmitted by the see-through prism 15 and prism 14, and then converged at the eye pint (EP) on the observer's right eye 82. Thus, the observer views the image produced by the LCD 67 with the image superimposed on an image of the outside world that extends forwards.

Sounds represented by an audio signal are heard through the earphone 9. Even when the earphone 9 is left stowed or mounted in the earphone mount 31c of the arm 2, since the opening of the earphone 9 faces the ear, sounds can be heard.

As mentioned above, the arm 2 can slide in the directions D1 relative to the right face pad 4. Moreover, the arm 2 can rotate in the directions θ2 and directions θ3. The viewer 1 can pivot in the directions θ1 on the hinge pins 41a and 41b included in the arm 2. A position or posture at or in which the viewer 1 is set in order to view an image can therefore be adjusted to a desired position or posture, which is suitable for a work situation, relative to the right eye 82.

For example, if the position of a screen image produced by the viewer 1 is improper, the control buttons 44 and 45 are operated in order to shift the position of the screen image displayed on the LCD 67. In addition, if the direction or position of a screen image must be changed greatly, the viewer 1 is, as mentioned above, rotated in the lateral directions θ1 or the arm 2 is turned in the lateral directions θ2 or the vertical directions θ3. If the distance in the direction of a ray axis O from the viewer 1 is improper, the arm 2 is turned as mentioned above and then slid in the directions D1 to lie at a proper position.

Moreover, in order to change a viewing eye, with which an image is viewed using the monocular HMD, from the right eye 82 to the left eye 83, the headband 3 having the arm 2 and viewer 1 fixed thereto is reversed laterally and then worn on the head. Thus, the viewing eye can be readily changed from the right eye 82 to the left eye 83. This is attributable to the fact that the right and left face pad members 4 and 5 share the same structure and the ray axis O of light projected by the viewer 1 extends to cross a line linking the center of the right face pad member 4 (center of the ball 34) and the center of the left face pad member 5 or cross a point near the line. In this case, however, before viewing an image is started, the selection switch 65 must be pressed (by operating the control button 45) with the selection switch 64 held down (by operating the control button 44). Thus, a screen image displayed by the viewer 1 must be reversed (rotated 180° by changing vertical and lateral positions). Otherwise, the selection switch 64 or 65 is pressed in order to reverse a screen image displayed by the viewer 1.

Note that even when the viewing eye is changed to the left eye 83 as mentioned above, the position or posture at or in which the viewer 1 is set in order to view an image can be, as mentioned above, adjusted by rotating and sliding the arm 2 and turning the viewer 1. Moreover, owing to the nose pad portion 19c, the viewer 1 will neither come into contact with the nose 87 nor approach the viewer 1 too closely with a distance shorter than a predetermined distance between them.

Furthermore, the right and left face pad members 4 and 5 share the same structure. Thus, the ball 34 may be detached together with the arm 2 and joint 21 by removing the nut 39, and then attached to the left face pad member 5. Consequently, the viewing eye may be changed from the right eye to the left eye or vice versa. Even in this case, it is necessary to reverse a displayed state of a screen image.

Moreover, the ball 34 may be detached together with the arm 2 and joint 21 by temporarily removing the nut 39, and attached to a dedicated adapter. Thus, the ball 34 can be attached not only to the headband 3 but also to a head holding means such as a helmet or a cap or the like.

In the aforesaid monocular HMD, the headband 3, arm 2, and viewer 1 are assembled as one structure. Therefore, the monocular HMD can be worn comfortably and handled with improved ease. Moreover, the right and left face pad members 4 and 5 of the headband 3 are brought into contact with any positions on the cheekbone. A region on which the HMD is worn can be selected relatively freely. A difference in a region on which the HMD is worn between one individual to another can therefore be absorbed.

Moreover, since the compound circuit board unit 51 composed of a plurality of rigid circuit boards and a plurality of FPCs is adopted, a posture in which the circuit board unit 51 is placed can be determined freely in conformity with the curvatures exhibited by the outlines of the bodies of the viewer 1 and arm 2. Thus, since the posture in which the circuit board unit is placed can be determined freely, the monocular HMD, or in particular, the arm thereof can be designed compactly. Moreover, shapes determined with priority given to the best way of functioning the viewer and arm can be adopted as the shapes of the viewer 1 and arm 2.

In the monocular HMD, since the arm 2 has the narrowed portion 31d as mentioned above, although the observer's visual field is narrowed by the viewer 1 and arm 2, part of the visual field is left intact owing to the narrowed portion. An ambient environmental condition on the side of a viewing eye can therefore be recognized with the viewing eye.

Even when the monocular HMD is worn on the head 81, the headband is not present on the superior region of the head 81. Consequently, a helmet can be worn together with the monocular HMD. This is helpful in performing work such as maintenance and inspection of a machine.

As mentioned above, the control buttons 44 and 45 are located near the ball support 33 and closely to the viewer 1. This leads to improved ease of operation. Moreover, a user who operates the control buttons has only a little pain in the head. Furthermore, the control buttons 44 and 45 are different from each other in shapes. Therefore, even when image displayed states are changed, or more particularly, even when a viewing eye is changed from the right eye to the left eye by laterally reversing the headband 3, pressing an incorrect switch can be prevented.

Moreover, the plurality of control buttons that are operated in order to press the switches and that have different shapes is arranged on the arm 2. Operating an incorrect control button after a viewing eye is changed from the right eye to the left eye can be prevented. This results in improved operability.

Moreover, the main cable 7 is extended backwards behind the ear 84, and can therefore be readily routed to the back. Consequently, when a viewing eye is changed from the right eye to the left eye by laterally reversing the headband, or when the control buttons 44 and 45 are operated in order to change image displayed states, the main cable 7 will not be annoying. The control buttons can be operated easily. This results in improved maneuverability.

Furthermore, as long as the earphone 9 is mounted on the earphone mount 31c of the arm 1, when the monocular HMD is carried, the earphone cord 10 will not get tangled. Moreover, since the earphone 9 is of an ear embedded type, an external emergency sound or the like can be readily identified. Moreover, even when the earphone 9 is left mounted on the earphone mount 31c, since the sounding opening of the earphone 9 faces the head, sounds are audible.

According to a variant of arrangement of the control buttons 44 and 45 in the monocular HMD of the present embodiment, the control buttons 44 and 45 can be arranged along the extension of the ball support 33 closely to the posterior region of the head. In this case, when the switches are pressed, the viewer 1 recedes from the eye. The eye is therefore protected during pressing of the switches.

Moreover, in the monocular HMD of the present embodiment, the arm 2 has the narrowed portion 31d adjacent to the viewer 1. If the FPC 55 lying inside the narrowed portion 31d is twisted 90° to lie horizontally, the vertical thickness of the narrowed portion can be further reduced. Consequently, the visual field offered by a viewing eye expands more widely, and the outside world that extends laterally can be seen easily.

Moreover, the band 38 included in the headband 3 may be structured to be folded in the middle thereof. This leads to improved portability. Furthermore, the band 38 may be structured to be able to slide or to be stretchable and contractile, or may be made of a rubber. In this case, the band 38 can be conformed to the size of the head of an individual. Consequently, the headband can be worn with improved comfort.

Moreover, in the monocular HMD of the present embodiment, the band 38 of the headband 3 may be structured to encircle the head, and the Velcro tape may be fixed to the terminals of the band 38 so that the length of the band 38 can be adjusted. In this case, pressure applied to the head can be increased or decreased. Consequently, the headband can be worn with improved comfort.

Moreover, in the monocular HMD of the present embodiment, another face pad member may be added to the two face pad members and three pad members may thus be included in total. This leads to improved comfort in wearing the headband on the head. Furthermore, the pads included in the face pad members may be able to be replaced with new ones. This is preferred in terms of sanitation.

Moreover, according to a variant of the arm of the monocular HMD of the present embodiment, the arm is structured not to rotate on the face pad member. This leads to a more compact and lightweight HMD that can be worn more comfortably.

Moreover, the monocular HMD of the present embodiment may be structured to have the earphone 9 incorporated in the headband 3 or arm 2. In this case, the earphone cord 10 will not be exposed to outside. This is helpful in handling or carrying the HMD.

As described so far, according to the present invention, there is provided a head-mounted display device that is compact and easily worn on the head. The head-mounted display device permits easy viewing of a displayed screen image and easy observation of an ambient environmental condition. Moreover, an earphone can be handled easily. The present invention thus provides a user-friendly head-mounted display device.

### Industrial Applicability

As described so far, a head-mounted display device in accordance with the present invention is designed compactly and easily worn on the head. While a displayed screen image is viewed, an ambient environmental condition can be observed easily. Moreover, an earphone can be handled easily. The present invention thus provides a user-friendly head-mounted display device.

## Claims

1. A head-mounted image display device comprising:
an image display means (67);
an optical system (14 and 15) for projecting an image, which is produced by said image display means, and/or an image of an ambient outside world on at least one of the observer's eyes (82);
a casing block (1 and 2) in which said image display means and said optical system are incorporated so that they can be held at a position near the observer's head (81) at which an image is viewed; and
a supporting block (3) for supporting said casing block on the head,
wherein: said casing block includes an arm (2) that is borne by said supporting block, and a viewer (1) that is borne by said arm and has said image display means and said optical system incorporated therein; and
said arm adjoining said viewer has a portion thereof narrowed.

2. A head-mounted image display device comprising:
an image display means (67);
an optical system (14 and 15) for projecting an image, which is produced by said image display means, and/or an image of an ambient outside world on at least one of the observer's eyes (82);
a circuit board unit (51) for controlling said image display means;
a casing block (1 and 2) in which said image display means, said optical system, and said circuit board unit are incorporated so that they can be held at a position near the observer's head (81) at which an image is viewed; and
a supporting block (3) for supporting said casing block on the head,
wherein: said casing block includes an arm (2) that is borne directly by said supporting block and has said circuit board unit (51) incorporated therein, and a viewer (1) that is borne by said arm and has said image display means and said optical system incorporated therein; and
said circuit board unit incorporated in said arm includes a plurality of rigid substrates (52 and 54) and a plurality of flexible printed-circuit boards (53 and 55) that link said rigid substrates.

3. A head-mounted image display device according to Claim 2, wherein said arm has a plurality of switching means (44 and 45) that have different shapes.

4. A head-mounted image display device according to Claim 2, wherein: a main cable (7) is coupled to the rear end of said arm; and when said head-mounted image display device is worn on the head, said main cable can be routed from behind the observer's ear (84) to the back by way of the shoulder.

5. A head-mounted image display device comprising:
an image display means (67);
an optical system (14 and 15) for projecting an image, which is produced by said image display means, and/or an image of an ambient outside world on at least one of the observer's eyes (82);
an earphone (9) for radiating sounds;
a casing block (1 and 2) in which said image display means, said optical system, and said earphone are incorporated or stowed so that they can be held at a position near the observer's head (81) at which an image is viewed; and
a supporting block (3) for supporting said casing block on the head,
wherein: said casing block includes an arm (2) that is borne directly by said supporting unit and has said earphone stowed therein, and a viewer (1) that is borne by said arm and has said image display means and said optical system incorporated therein; and
said earphone can be fixed to and stowed in said arm.

6. A head-mounted image display device according to Claim 5, wherein a state in which said earphone is fixed to said arm is a state in which sounds are audible.
